# EUROPEAN PATENT SPECIFICATION

(11) **EP 2 933 155 B1**
(45) Date of publication and mention of the grant of the patent: **14.02.2018**
(21) Application number: 14165197.6
(22) Date of filing: 17.04.2014
(51) Int. Cl.: B60S 1/60, B60R 1/06

(54) **Optical system for a vehicle, cleaning device and vehicle comprising an optical system**
Optisches System für ein Fahrzeug, Reinigungsvorrichtung und Fahrzeug mit einem optischen System
Système optique pour un véhicule, véhicule et dispositif de nettoyage comprenant un système optique

(43) Date of publication of application: 21.10.2015
(73) Proprietor: SMR Patents S.à.r.l., 1653 Luxembourg (LU)
(72) Inventor: Shepherd, Robert, Guildford GU2 9GB Surrey (GB); Rehill, Graham, West Sussex PO19 3DJ (GB)
(74) Representative: Weber-Bruls, Dorothée

(56) References cited:
- EP-A1- 2 236 367
- DE-A1- 19 845 833
- DE-A1-102010 017 970
- DE-A1-102011 106 957
- FR-A1- 2 681 567

## Description

The invention relates to an optical system for a vehicle, comprising at least one first surface, and a cleaning device for cleaning of at least the first surface according to the preamble of claim 1. The invention further relates to a cleaning device and to a vehicle.

Optical systems, in particular camera systems like e.g. rear view camera systems, are known from conventional vehicles. Such optical systems are often used to provide an image of a surrounding of the vehicle on a display inside the vehicle readily viewable by the driver, for example when the vehicle is reversing. Further, optical systems are known which comprise or are part of a sensor system, which is evaluated by a computer system in order to generate information on an external environment surrounding the vehicle. The generated information might be presented to the attention of the driver of the vehicle, e.g. in form of a warning notice, and/or might be used by automated systems of the vehicle. For example, such optical systems can comprise, but are not limited to, lane change assistance systems, parking assistance systems, rear view cameras and surround view cameras. It is also desired to replace or complement conventional rear view mirrors of a vehicle with an image receiving camera system and a display system inside the vehicle, which replaces or enhances the rear view of the driver of the vehicle.

Such optical systems comprise at least one surface, which is generally aligned to an exterior of the vehicle and which is at least partly translucent. Such surfaces may generally be comprised by a surface of a lens, a light pane, a lens cover, a photo sensor, a video sensor, a camera system, a display or the like. However, such surfaces are subject to environmental influences like contamination with dirt, rain and the like, which over time reduce translucency of the surface and thus may lead to malfunction of the optical system. As a possible solution, the system might arrange to inform the driver that the surface has reached an unacceptable level of cleanliness, requiring an occupant of the vehicle to manually clean the surface. Thus, there is a desire for automatic cleaning of at least one or certain surfaces of an optical system.

DE 10 2011 106 957 A1 describes an optical system for a vehicle, comprising a rear view camera which is connected to a rear bumper of the vehicle. The rear view camera is activated when the vehicle reverses and comprises a lens having an optical surface for light transmission and a cleaning device for cleaning the optical surface. The cleaning device comprises a wiper, which is in mechanical contact to the optical surface. A cleaning of the optical surface is facilitated by relative movement of the wiper and the optical surface. In one described embodiment, the cleaning device additionally comprises a device for spraying water on the optical surface to simplify cleaning of the optical surface by the wiper.

It is a drawback of this type of optical system that the device facilitates a complex construction and necessitates the mounting of the optical system and cleaning device to a fixed element of the vehicle, in particular the rear bumper.

DE 198 45 833 A1 discloses a flat door member which forms a part of the inside door panel of a vehicle door and comprises a reservoir for receiving a liquid. An outside mirror comprises a cleaning device connected to the reservoir in the door element.

It is an object of the invention to provide an optical system for a vehicle as well as a cleaning device for an optical system, which reliably facilitates cleaning of at least one surface of the optical system and which is configured to be mounted to a movable vehicle part. It is an further object of the invention to provide a vehicle comprising a reliably cleanable optical device.

These objects of the invention are solved by an optical system according to the preamble of claims 1 having a reservoir for a cleaning liquid, wherein the reservoir and the cleaning liquid emitter are configured to be mutually mounted to the movable vehicle element, characterized in that the cleaning liquid emitter and the reservoir are of one-piece design.

Preferably, the cleaning liquid emitter and the first surface are configured to be mutually mounted to the movable vehicle element.

In a preferred embodiment the cleaning liquid emitter and the reservoir are connected by a fluid conducting device, in particular a flexible tube.

Expediently, the movable vehicle element is a vehicle element selected from the group comprising a vehicle door, a vehicle trunk lid, a luggage compartment lid, an exterior rear view mirror, a hood and an exterior camera mounting device.

The optical system might be the reservoir is connectable to and/or comprises a fluid inlet.

It is preferred that the fluid inlet is configured to receive collected water, in particular condensed water and/or rain water.

According to a first preferred embodiment, the fluid inlet is connectable to a moisture trap for receiving water collected by the moisture trap.

In an alternative embodiment, which is equally preferred, the fluid inlet is connectable to a fluid tank of the vehicle, in particular to a fluid tank of a windscreen washer system and/or a headlight washer system.

Preferably, the cleaning device comprises a cleaning member, in particular a mechanical cleaning member selected from the group comprising wiper arms, wiper blades, wiping cloth, wiping tissue and combinations thereof.

Particularly, the cleaning member and/or the first surface are provided to be moveable with respect to each other for providing cleaning of the first surface.

According to a preferred embodiment, the optical system comprises at least one of a lens, a light pane, a lens cover, a photo sensor, a video sensor, a camera system and a display, and wherein the at least one first surface is a surface of said one of a lens, a light pane, a lens cover, a photo sensor, a video sensor, a camera system and a display.

The objects of the invention are further solved by a cleaning device for an optical system for a vehicle, comprising a cleaning liquid emitter and a reservoir, wherein the reservoir and the cleaning liquid emitter are configured to be mutually mounted to a movable vehicle element, wherein the movable vehicle element is configured to be moveable with respect to a main vehicle body of the vehicle, wherein the cleaning liquid emitter and the reservoir are of one-piece design.

The objects of the invention are even further solved by a vehicle, comprising an optical system with the above mentioned features.

The optical system and the cleaning device according to the invention expediently provide a particularly compact embodiment, which allows to mount the cleaning device to a movable vehicle element, e.g. a exterior rear view mirror casing, without the necessity to provide a complicated and expensive fluidal connection of a cleaning liquid emitter of the cleaning device located on the movable vehicle element to a cleaning liquid reservoir located on the vehicle body. Preferably, the reservoir for the cleaning liquid is configured to be mounted to the movable vehicle element by choosing a volume and/or shape of the reservoir fitting to the movable vehicle element and/or an excavation provided by or connected to the movable vehicle element. Preferably, also the first surface which is to be cleaned by the cleaning device is mounted to the movable vehicle element, thus further providing a compact and space saving construction of the optical system. The cleaning liquid emitter is designed to transport cleaning liquid to the first surface and/or to a cleaning member of the cleaning device, e.g. a wiper. This allows a simplified and enhanced cleaning of the first surface by washing away debris and dust from the first surface. To simplify mounting and adjusting of the cleaning device, the cleaning liquid emitter and the reservoir are of one-piece design, thus allowing mounting of the cleaning device in a single step.

Preferably the reservoir comprises a fluid inlet for loading the reservoir with cleaning liquid. In particular in case that water is used as a cleaning liquid, the fluid inlet might be configured to receive collected water like condensed water or rain water, which preferably is condensed and/or collected by a moisture trap. Use of collected water reduces or even does away with the necessity to refill the reservoir with cleaning liquid. In addition or alternatively, the fluid inlet is configured to be refilled with cleaning liquid manually by a service person or the operator of the vehicle, and/or the fluid inlet is configured to be connectable to a fluid tank of the vehicle already containing cleaning liquid, e.g. a windscreen washer tank.

According to a preferred embodiment of the invention, the optical system comprises a video camera device provided in the casing of an exterior rear view mirror. The casing of the exterior rear view mirror is connected via a pivot to the vehicle body and thus forms a movable vehicle element which is movable with respect to a main body of the vehicle. The video camera device is adapted to capture pictures of an area neighboring and behind the vehicle and to display captured pictures on a display device in the interior of the vehicle, thus enhancing the rear view of a driver of the vehicle or replacing a conventional exterior rear view mirror. The video camera device comprises a first surface which faces a surrounding of the vehicle and thus is subjected to dirt, dust, rain and/or other environmental influences during normal operation of the vehicle. The reservoir of the cleaning device provides a size, shape and volume adapted to be arranged in the exterior mirror casing. Therefore, a compact and space saving arrangement for the cleaning device is provided, allowing simplified cleaning of the first surface while at the same time preserving the pivotal movement of the exterior mirror casing with respect to the vehicle body. In particular, no fluid error-prone fluid connection between the main body of the vehicle and the exterior mirror casing is necessary.

In an alternative, the exterior mirror casing is attached to a vehicle door which forms a moveable vehicle element, and the reservoir is mounted inside a cavity of the vehicle door. A fluid connection in form of a flexible tube connects the reservoir and the cleaning fluid emitter provided in the exterior mirror casing. Again, this arrangement provides a simple construction of the optical system, in which no error-prone fluid connection between the cleaning liquid emitter mounted on the movable vehicle element and a reservoir attached to the main vehicle body is necessary.

In other preferred embodiments of the invention, the optical system comprises at least one lens, light pane, lens cover, photo sensor, camera system and/or display, which comprises the first surface, wherein the optical system is attachable to a movable vehicle element in form of a vehicle door, vehicle trunk lid, luggage compartment lid, hood and/or exterior mirror mounting device. In each case, the cleaning liquid emitter and reservoir are adapted in size, volume, shape, in regard to fastening means and/or in regard to location to allow mounting on the movable vehicle element.

More and other features and preferred embodiments of the invention arise from the following description of a preferred embodiment of the invention with reference to the accompanying drawings.
- Fig. 1: shows a schematic view of the cleaning liquid reservoir of the optical system;
- Fig. 2: shows a schematic side view of a cleaning liquid reservoir inside a vehicle door.

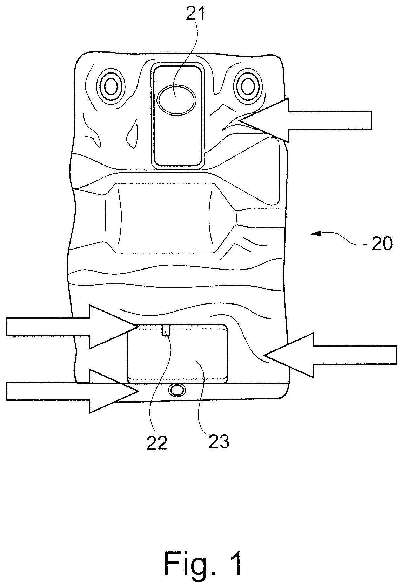

Fig. 1 shows a cleaning liquid reservoir 20 for an optical system. The reservoir 20 is embodied as a flexible, closed bag for containing a cleaning liquid. In the shown embodiment the cleaning liquid is water, but any suitable cleaning liquid can be used. The bag of the reservoir 20 is made from a liquid-proof material, in this case polyvinyl chloride. The reservoir 20 comprises a fluid inlet 21 for receiving cleaning liquid and a fluid outlet 22 for transmitting cleaning liquid to a cleaning liquid emitter. A fluid pump 23 is integrally attached to the reservoir 20 and is configured to pump cleaning liquid through the fluid outlet 22 towards the cleaning liquid emitter.

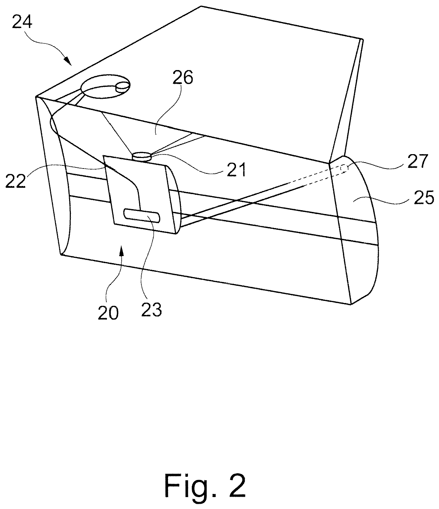

Fig. 2 shows a cleaning liquid reservoir 20 for an optical system 24. The reservoir 20 is arranged inside a vehicle door 25 comprising an inlet structure 26 for leading fluid to the fluid inlet 21 of the reservoir 20. To lead fluid from the reservoir 20 to the optical system 24 the fluid pump 23 pumps fluid through the fluid outlet 22. Further, the reservoir 20 comprises an additional fluid inlet 27 being reachable for manual filling the reservoir 20 with fluid. In the embodiment shown in Fig. 2 the opening of the additional fluid inlet 27 is inside the vehicle door 25. When the vehicle door 25 is open the opening of the additional fluid inlet 27 is accessible. To preserve evaporation the opening can be closed by any open- and closeable device.

### Reference sign list

- 20: reservoir for a cleaning liquid
- 21: fluid inlet
- 22: fluid outlet
- 23: fluid pump
- 24: optical system
- 25: vehicle door
- 26: inlet structure
- 27: additional fluid inlet

## Claims

1. Optical system (24) for a vehicle with at least one movable vehicle element which is movable with respect to a main vehicle body, comprising
at least one first surface, and a cleaning device for cleaning of at least the first surface, wherein the cleaning device comprises a cleaning liquid emitter, and
a reservoir for a cleaning liquid (20), wherein the reservoir and the cleaning liquid emitter are configured to be mutually mounted to the movable vehicle element,
**characterized in that**
the cleaning liquid emitter and the reservoir are of single-piece design.

2. Optical system (24) according to claim 1, **characterized in that** the cleaning liquid emitter and the first surface are configured to be mutually mounted to the movable vehicle element.

3. Optical system (24) according to any of the proceeding claims, **characterized in that** the cleaning liquid emitter and the reservoir are connected by a fluid conducting device, in particular a flexible tube.

4. Optical system (24) according to any of the proceeding claims, **characterized in that** the movable vehicle element is a vehicle element selected from the group comprising a vehicle door (25), a vehicle trunk lid, a luggage compartment lid, an exterior rear view mirror, a hood and an exterior camera mounting device.

5. Optical system (24) according to any of the proceeding claims, **characterized in that** the reservoir is connectable to and/or comprises a fluid inlet (21).

6. Optical system (24) according to any of the proceeding claims, **characterized in that** the fluid inlet (21) is configured to receive collected water, in particular condensed water and/or rain water.

7. Optical system (24) according to any of the proceeding claims, **characterized in that** the fluid inlet (21) is connectable to a moisture trap for receiving water collected by the moisture trap.

8. Optical system (24) according to any of the proceeding claims, **characterized in that** the fluid inlet (21) is connectable to a fluid tank of the vehicle, in particular to a fluid tank of a windscreen washer system and/or a headlight washer system.

9. Optical system (24) according to any of the proceeding claims, **characterized by** an additional fluid inlet (27) connectable to the fluid tank of the vehicle, in particular to the fluid tank of the windscreen washer system and/or the headlight washer system, for manual filling the fluid tank with fluid.

10. Optical system (24) according to any of the proceeding claims, **characterized in that** the cleaning device comprises a cleaning member, in particular a mechanical cleaning member selected from the group comprising wiper arms, wiper blades, wiping cloth, wiping tissue and combinations thereof.

11. Optical system (24) according to any of the proceeding claims, **characterized in that** the cleaning member and/or the first surface are provided to be moveable with respect to each other for providing cleaning of the first surface.

12. Optical system (24) according to any of the proceeding claims, **characterized in that**
the optical system (24) comprises at least one of a lens, a light pane, a lens cover, a photo sensor, a video sensor, a camera system and a display, and wherein the at least one first surface is a surface of said one of a lens, a light pane, a lens cover, a photo sensor, a video sensor, a camera system and a display.

13. Cleaning device for an optical system (24) for a vehicle, comprising a cleaning liquid emitter and a reservoir, wherein the reservoir and the cleaning liquid emitter are configured to be mutually mounted to a movable vehicle element, wherein the movable vehicle element is configured to be moveable with respect to a main vehicle body of the vehicle, **characterized in that**
the cleaning liquid emitter and the reservoir are of single-piece design.

14. Vehicle, comprising an optical system (24) according to claim 1.

## Patentansprüche

1. Optisches System (24) für ein Fahrzeug mit mindestens einem beweglichen Fahrzeugelement, das bezüglich einer Fahrzeughauptkarosserie bewegbar ist, umfassend
mindestens eine erste Oberfläche und eine Reinigungsvorrichtung zum Reinigen zumindest der ersten Oberfläche, wobei die Reinigungsvorrichtung einen Reinigungsflüssigkeitsemitter und
ein Reservoir für eine Reinigungsflüssigkeit (20) umfasst,
wobei das Reservoir und der Reinigungsflüssigkeitsemitter so konfiguriert sind, dass sie gemeinsam an dem beweglichen Fahrzeugelement angebracht sind,
**dadurch gekennzeichnet, dass**
der Reinigungsflüssigkeitsemitter und das Reservoir einteilig ausgebildet sind.

2. Optisches System (24) nach Anspruch 1, **dadurch gekennzeichnet, dass**
der Reinigungsflüssigkeitsemitter und die erste Oberfläche so konfiguriert sind, dass sie gemeinsam an dem beweglichen Fahrzeugelement angebracht sind.

3. Optisches System (24) nach einem der vorangehenden Ansprüche, **dadurch gekennzeichnet, dass**
der Reinigungsflüssigkeitsemitter und das Reservoir durch eine fluidleitende Vorrichtung, insbesondere einen flexiblen Schlauch, verbunden sind.

4. Optisches System (24) nach einem der vorangehenden Ansprüche, **dadurch gekennzeichnet, dass**
das bewegliche Fahrzeugelement ein Fahrzeugelement ist, das aus der Gruppe ausgewählt ist, die eine Fahrzeugtür (25), einen Kofferraumdeckel, einen Gepäckraumklappe, einen Außenrückblickspiegel, eine Haube und eine externe Kamerahaltevorrichtung umfasst.

5. Optisches System (24) nach einem der vorangehenden Ansprüche, **dadurch gekennzeichnet, dass**
das Reservoir mit einem Fluideinlass (21) verbindbar ist und/oder einen Fluideinlass (21) umfasst.

6. Optisches System (24) nach einem der vorangehenden Ansprüche, **dadurch gekennzeichnet, dass**
der Fluideinlass (21) so konfiguriert ist, dass er gesammeltes Wasser, insbesondere Kondenswasser und/oder Regenwasser, aufnimmt.

7. Optisches System (24) nach einem der vorangehenden Ansprüche, **dadurch gekennzeichnet, dass**
der Fluideinlass (21) mit einer Feuchtigkeitsfalle zur Aufnahme von Wasser, das von der Feuchtigkeitsfalle gesammelt wird, verbindbar ist.

8. Optisches System (24) nach einem der vorangehenden Ansprüche, **dadurch gekennzeichnet, dass**
der Fluideinlass (21) mit einem Fluidtank des Fahrzeugs, insbesondere mit einem Fluidtank einer Scheibenwaschanlage und/oder einer Scheinwerferwaschanlage, verbindbar ist.

9. Optisches System (24) nach einem der vorangehenden Ansprüche, **gekennzeichnet durch**
einen zusätzlichen Fluideinlass (27), der mit dem Fluidtank des Fahrzeugs, insbesondere mit dem Fluidtank der Scheibenwaschanlage und/oder der Scheinwerferwaschanlage, zum manuellen Befüllen des Fluidtanks mit Fluid verbindbar ist.

10. Optisches System (24) nach einem der vorangehenden Ansprüche, **dadurch gekennzeichnet, dass**
die Reinigungsvorrichtung ein Reinigungselement umfasst, insbesondere ein mechanisches Reinigungselement, das aus der Gruppe ausgewählt ist, die Wischerarme, Wischerblätter, Wischtuch, Wischgewebe und Kombinationen davon umfasst.

11. Optisches System (24) nach einem der vorangehenden Ansprüche, **dadurch gekennzeichnet, dass**
das Reinigungselement und/oder die erste Oberfläche so vorgesehen sind, dass sie relativ zueinander bewegbar sind, um eine Reinigung der ersten Oberfläche bereitzustellen.

12. Optisches System (24) nach einem der vorangehenden Ansprüche, **dadurch gekennzeichnet, dass**
das optische System (24) mindestens eines aus einer Linse, einer Lichtscheibe, einer Linsenabdeckung, einem Fotosensor, einem Videosensor, einem Kamerasystem und einem Display umfasst, und wobei die mindestens eine erste Oberfläche eine Oberfläche des einen genannten aus einer Linse, einer Lichtscheibe, einer Linsenabdeckung, einem Fotosensor, einem Videosensor, einem Kamerasystem und einem Display ist.

13. Reinigungsvorrichtung für ein optisches System (24) für ein Fahrzeug, umfassend einen Reinigungsflüssigkeitsemitter und ein Reservoir, wobei das Reservoir und der Reinigungsflüssigkeitsemitter so konfiguriert sind, dass sie gemeinsam an einem beweglichen Fahrzeugelement angebracht sind, wobei das bewegliche Fahrzeugelement so konfiguriert ist, dass es bezüglich einer Fahrzeughauptkarosserie des Fahrzeugs bewegbar ist, **dadurch gekennzeichnet, dass**
der Reinigungsflüssigkeitsemitter und das Reservoir einteilig ausgebildet sind.

14. Fahrzeug, umfassend ein optisches System (24) nach Anspruch 1.

## Revendications

1. Système optique (24) pour un véhicule avec au moins un élément de véhicule mobile qui est mobile par rapport à une carrosserie de véhicule principal, comprenant
au moins une première surface et un dispositif de nettoyage pour nettoyer au moins la première surface, dans lequel le dispositif de nettoyage comprend un émetteur de liquide de nettoyage, et
un réservoir pour un liquide de nettoyage (20), dans lequel le réservoir et le émetteur de liquide de nettoyage sont configurés pour être montés mutuellement sur l'élément de véhicule mobile,
**caractérisé en ce que**
le émetteur de liquide de nettoyage et le réservoir sont de conception monobloc.

2. Système optique (24) selon la revendication 1, **caractérisé en ce que**
le émetteur de liquide de nettoyage et la première surface sont configurés pour être montés mutuellement sur l'élément de véhicule mobile.

3. Système optique (24) selon l'une quelconque des revendications précédentes, **caractérisé en ce que**
le émetteur de liquide de nettoyage et le réservoir sont reliés par un dispositif conducteur de fluide, en particulier un tube flexible.

4. Système optique (24) selon l'une quelconque des revendications précédentes, **caractérisé en ce que**
l'élément de véhicule mobile est un élément de véhicule choisi dans le groupe comprenant une portière de véhicule (25), un couvercle de coffre de véhicule, un couvercle de compartiment à bagages, un rétroviseur extérieur, un capot et un dispositif de montage de caméra extérieure.

5. Système optique (24) selon l'une quelconque des revendications précédentes, **caractérisé en ce que**
le réservoir peut être relié à et/ou comprend une entrée de fluide (21).

6. Système optique (24) selon l'une quelconque des revendications précédentes, **caractérisé en ce que**
l'entrée de fluide (21) est configurée pour recevoir de l'eau recueillie, en particulier de l'eau de condensation et/ou de l'eau de pluie.

7. Système optique (24) selon l'une quelconque des revendications précédentes, **caractérisé en ce que**
l'entrée de fluide (21) peut être reliée à un piège à humidité pour recevoir l'eau recueillie par le piège à humidité.

8. Système optique (24) selon l'une quelconque des revendications précédentes, **caractérisé en ce que**
l'entrée de fluide (21) peut être reliée à un réservoir de fluide du véhicule, en particulier à un réservoir de fluide d'un système de lave-glace et/ou d'un système de lave-phares.

9. Système optique (24) selon l'une quelconque des revendications précédentes, **caractérisé par**
une entrée de fluide supplémentaire (27) pouvant être reliée au réservoir de fluide du véhicule, en particulier au réservoir de fluide du système de lave-glace et/ou du système de lave-phares, pour remplir manuellement le réservoir de fluide avec du fluide.

10. Système optique (24) selon l'une quelconque des revendications précédentes, **caractérisé en ce que**
le dispositif de nettoyage comprend un élément de nettoyage, en particulier un élément de nettoyage mécanique choisi dans le groupe comprenant des bras d'essuie-glace, des balais d'essuie-glace, un chiffon d'essuyage, un tissu d'essuyage et des combinaisons de ceux-ci.

11. Système optique (24) selon l'une quelconque des revendications précédentes, **caractérisé en ce que**
l'élément de nettoyage et/ou la première surface sont prévus pour être mobiles l'un par rapport à l'autre pour fournir un nettoyage de la première surface.

12. Système optique (24) selon l'une quelconque des revendications précédentes, **caractérisé en ce que**
le système optique (24) comprend au moins l'une d'une lentille, d'une vitre de lumière, d'un couvercle de lentille, d'un capteur photo, d'un capteur vidéo, d'un système de caméra et d'un écran, et dans lequel l'au moins une première surface est une surface dudit d'une lentille, d'une vitre de lumière, d'un couvercle de lentille, d'un capteur photo, d'un capteur vidéo, d'un système de caméra et d'un écran.

13. Dispositif de nettoyage pour un système optique (24) pour un véhicule, comprenant un émetteur de liquide de nettoyage et un réservoir, dans lequel le réservoir et le émetteur de liquide de nettoyage sont configurés pour être montés mutuellement sur un élément mobile du véhicule, dans lequel l'élément mobile du véhicule est configuré pour être mobile par rapport à une carrosserie de véhicule principal, **caractérisé en ce que**
le émetteur de liquide de nettoyage et le réservoir sont de conception monobloc.

14. Véhicule, comprenant un système optique (24) selon la revendication 1.
